# EUROPEAN PATENT APPLICATION

(11) **EP 1 480 460 A1**
(43) Date of publication of application: **24.11.2004**
(21) Application number: 03707147.9
(22) Date of filing: 27.02.2003
(51) Int. Cl.: H04N 7/173, G06F 13/00

(54) **CAMERA SERVER AND IMAGE DISTRIBUTION METHOD**

(30) Priority: 28.02.2002 JP 2002054509
(71) Applicant: Sony Corporation, Tokyo 141-0001 (JP)
(72) Inventor: NAKAMURA, Minoru, Shinagawa-ku, Tokyo 141-0001 (JP)
(74) Representative: Horner, David Richard
(86) International application number: PCT/JP2003/002263
(87) International publication number: WO 2003/073763

(57) **Abstract**

According to the present invention, a frame rate information, appended to a transmission request for picture data from clients A, B, C and D, received by a camera server (1) over a communication interfacing unit (30), is registered, along with the client information indicating the client who has made the transmission request for the picture data. Based on the client information and the frame rate information, as registered, the compressed picture data is distributed at a requested frame rate to the clients A, B, C and D over the communication interfacing unit (30) to enable data transfer in a band suited to the network to which belong the clients A, B, C and D.

## Description

### Technical Field

This invention relates to a camera server for distributing picture data over a network, such as the Internet, to a client, and to a picture distributing processing method.

This application claims priority of Japanese Patent Application No.2002-054509, filed on February 28, 2002, the entirety of which is incorporated by reference herein.

### Background Art

Recently, a picture distributing system for distributing picture data over a network, such as the Internet, to a client, is becoming popular. This sort of the picture distributing system is classified into a video-on-demand type system in which picture data is transmitted as it read out from a pre-stored picture file, and a real-time broadcast type system in which a picture from e.g. a video camera is transmitted as it is compressed and encoded in situ.

The real-time broadcast type picture distribution system is constructed as a client server system made up by a video camera for inputting a picture, a picture server for distributing a picture supplied from the video camera over a network, such as the Internet, and a plural number of receiving clients for receiving pictures distributed from the picture server. It is also possible to use a network camera, having a connection function to the network, as a camera server, to distribute the picture from the camera server to plural receiving clients connected to the network, such as the Internet.

It should be noted that communication bands allocated to users who enjoy the services over e.g. the Internet differ from user to user depending on the difference in the respective connection conditions.

Up to now, the transmission performance of the camera server, the band of the communication networks or the picture drawing performance of the client, whichever is the most inconvenient, has proved a bottleneck, and has determined the frame rate of the moving picture data. Thus, there arise the following problems:

The band of the communication network is occasionally used to more than a necessary extent.

The same amount of picture data cannot be sent to plural clients such that services cannot be offered in an unbiased fashion.

Depending on the performance of the client apparatus, the picture drawing load is increased, such that it may be an occurrence that other processing operations cannot be performed simultaneously.

### Disclosure of the Invention

It is therefore an object of the present invention to provide a camera server and a picture distributing processing method, by means of which, in distributing picture data to a client over a network, such as the Internet, unbiased services can be offered to respective clients.

It is another object of the present invention to provide a camera server and a picture distributing processing method, by means of which data can be transferred in a band suited to a network to which belongs each client.

It is still another object of the present invention to provide a camera server and a picture distributing processing method, by means of which it is possible to control the load imposed on CPUs of each client apparatus.

It is yet another object of the present invention to provide a camera server and a picture distributing processing method, by means of which the moving picture can be displayed with a natural 'feel' even if the frame rate is set to a lower value.

In view of the above depicted status of the art, the present invention provides a camera server for distributing picture data in real time to plural clients connected to a network. The camera server comprises imaging means, compression processing means for converting the picture data, obtained by the imaging means, into compressed picture data, network interfacing means for communication with the client over the network, storage means for registering a frame rate information, appended to a transmission request for picture data from each client, received over the network interfacing means, along with the client information indicating the client who has made the transmission request for picture data, and control means for managing control for registering the client information and the frame rate information in the storage means and for distributing compressed picture data obtained by the compression processing means over the network interfacing means to each client at the requested frame rate based on the client information and the frame rate information registered in the storage means.

The present invention also provides a picture transmitting method for converting picture data obtained by imaging means into compressed picture data and distributing the compressed picture data in real time from a camera server to plural clients connected to a network. The picture transmitting method comprises registering a frame rate information appended to a transmission request for picture data from each client received by the camera server over a network interface, along with the client information indicating a client who has made the transmission request, and distributing the compressed picture data to each client over the network interface, based on the registered client information and the registered frame rate information.

Other objects, features and advantages of the present invention will become more apparent from reading the embodiments of the present invention as shown in the drawings.

### Brief Description of the Drawings

Fig.1 is a block diagram showing an illustrative structure of a client server system embodying the present invention.
Fig.2 is a block diagram showing an illustrative structure of a camera server system in the client server system of Fig.1.
Fig.3 is a flowchart showing the sequence of request processing in the client server system.
Fig.4 is a flowchart showing the sequence of processing of transmitting picture data in the client server system.

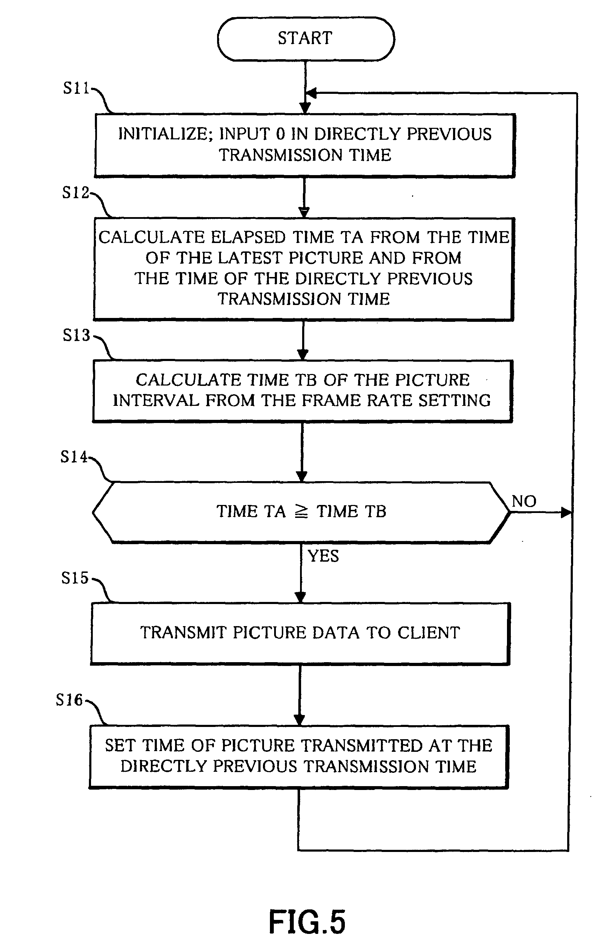

Fig.5 is a flowchart showing the sequence of processing of controlling the frame rate by the camera server.

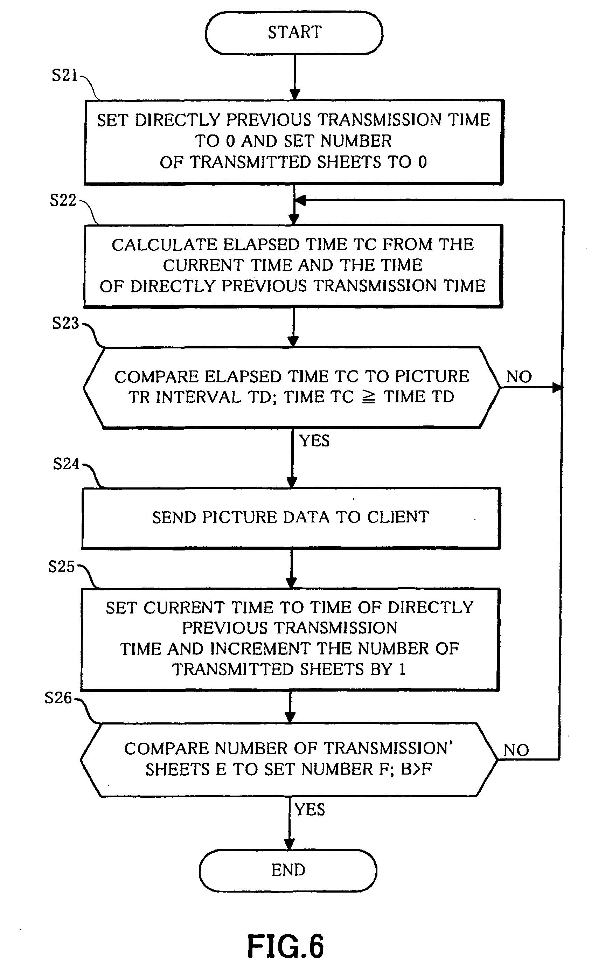

Fig.6 is a flowchart showing the sequence of processing of controlling the picture transmission interval and the number of transmitted pictures by the camera server.

### Best Mode for Carrying out the Invention

Referring to the drawings, a preferred embodiment of the present invention is now explained in detail.

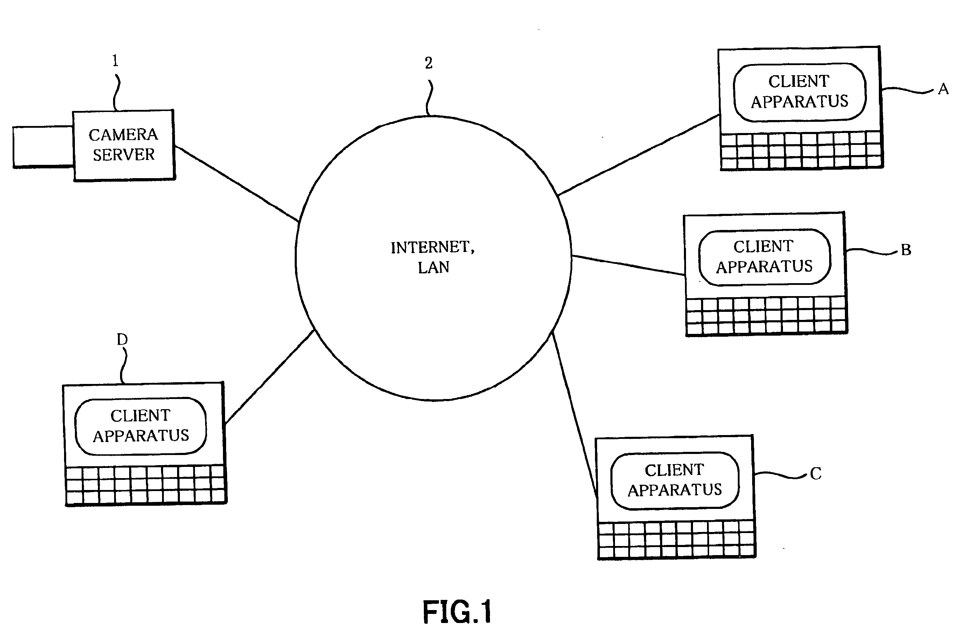

The present invention is applied to a client server system 7, shown for example in Fig.1.

This client server system 7 is e.g. a server system for a monitor system or attraction applications, and includes camera server 1 and a plural number of e.g. PC clients A to D, connected to a network 2, such as the Internet or a local network, such that an imaging output of the camera server 1, connected to the network 2, such as the Internet or a local network, is distributed in real time over the network 2 to the plural PC clients A to D.

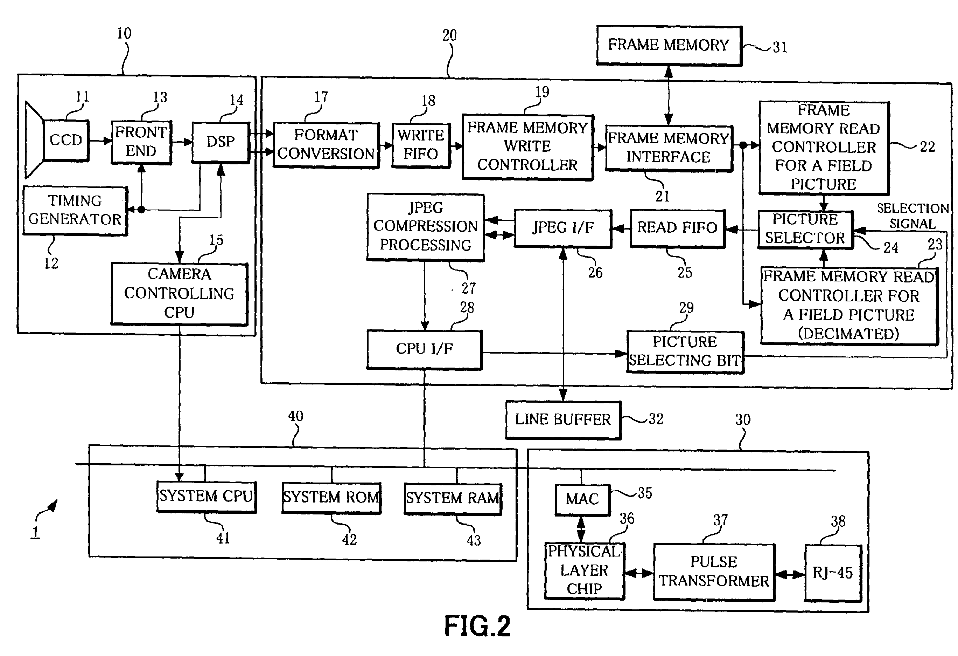

Referring to Fig.2, the camera server 1 includes a camera block 10 for imaging, a signal processing unit 20, supplied with an imaging output by the camera block 10, a communication interfacing unit 30, connected to an external network to effect communication, and a system controller 40 for controlling the respective units.

The camera block 10 is made up by an inter-line type CCD image sensor 11, a timing generator 12 for running the inter-line type CCD image sensor 11, a front end unit 13, supplied with an imaging output of the inter-line type CCD image sensor 11, a digital signal processing unit 14, supplied with an output of the front end unit 13, and a camera controlling CPU 15 for controlling the white balance or focussing, by way of performing camera control, based on the information from the digital signal processing unit 14.

In this camera block 10, the inter-line type CCD image sensor 11 effects photo-electric conversion, at a field period, and alternately sends out an imaging output for an odd field and an imaging output for an even field, forming a frame with the imaging output for the odd field, by way of performing interlaced outputting. That is, the inter-line type CCD image sensor 11 sequentially outputs analog imaging signals as an imaging output on the field basis. The front end unit 13 is made up by e.g., an A/D converter for sample-holding analog imaging signals from the inter-line type CCD image sensor 11 to effect analog/digital conversion. The digital signal processing unit 14 performs digital signal processing on the digital imaging signals from the front end unit 13 to output an interlaced YUV (4:1:1) digital picture signal.

The signal processing unit 20 includes a format converter 17, supplied from the digital signal processing unit 14 of the camera block 10 with the interlaced YUV (4: 1: 1) digital picture signal, a write FIFO memory 18, supplied with an output of the format converter 17, a frame memory write controller 19, supplied with an output of the write FIFO memory 18, a frame memory interfacing unit 21, supplied with an output of the frame memory write controller 19, and a frame memory 31, connected to the frame memory interfacing unit 21. The signal processing unit 20 also includes a frame memory read controller for a frame picture 22 and a frame memory read controller for a field picture 23, both supplied with outputs of the frame memory interfacing unit 21, a read FIFO memory 25, selectively supplied with outputs of the frame memory read controller for a frame picture 22 or the frame memory read controller for a field picture 23, through a picture selector 24, a JPEG·I/F unit 26, supplied with an output of the read FIFO memory 25, a JPEG compression processing unit 27 and a line buffer memory 32, both of which are connected to this JPEG·I/F unit 26, a CPU·I/F unit 28, supplied with an output of the JPEG compression processing unit 27, and a picture selection bit register 29, connected to this CPU·I/F unit 28.

In this signal processing unit 20, the format converter 17 converts the interlaced YUV (4:1:1) digital picture signal from the digital signal processing unit 14 into YCbCr (4:2:2) signal for JPEG compression.

The write FIFO memory 18 takes up the difference between the speed with which the signal is supplied from the camera block 10 and the speed with which the signal is written in the frame memory 31. The frame memory write controller 19 manages control of writing the YCbCr (4:2:2) signal, supplied from the format converter 17 through the write FIFO memory 18, via the frame memory interfacing unit 21 in the frame memory 31, for converting the YCbCr (4:2:2) signal from the interlaced signal to the non-interlaced signal.

The frame memory interfacing unit 21 time-divisionally controls the write, read and refresh operations for the frame memory 31.

The frame memory read controller for a frame picture 22 manages control for reading out a first field picture and a second field picture, as a sole frame picture, from the frame memory 31 through the frame memory interfacing unit 21.

On the other hand, the frame memory read controller for a field picture 23 manages control for reading out only the first field picture or the second field picture from the frame memory 31 through the frame memory interfacing unit 21.

The picture selector 24 selects the YCbCr (4:2:2) signal of the frame picture, read out by the frame memory read controller for a frame picture 22 from the frame memory 31 or the YCbCr signal of the field picture, read out by the field memory read controller for a field picture 23 from the frame memory 31, based on a Sel signal derived from a picture selecting bit supplied from a system controlling CPU 41 of the system controller 40 through the CPU·I/F unit 28 to the picture selection bit register 29.

The read FIFO memory 25 takes up the difference between the speed of the YCbCr (4:2:2) signal of the frame picture or the field picture, read out from the frame memory 31, and the JPEG compression speed. The JPEG·I/F unit 26 transiently stores the YCbCr (4:2:2) signal of the frame or field signal, supplied via the picture selector 24, in the line buffer memory 32, and performs raster block conversion on the stored signal. The JPEG·I/F unit 26 routes the so converted signal to the JPEG compression processing unit 27, at the same time as it controls the operation of the JPEG compression processing unit 27. This JPEG compression processing unit 27 performs compression processing, conforming to the JPEG, on the raster block converted YCbCr (4:2:2) signal. An output of the JPEG compression processing unit 27, that is the JPEG compressed picture data, is written through the CPU·I/F unit 28 in a system RAM 42 of the system controller 40.

The JPEG compressed picture data is written through the system controlling CPU 41 in the system RAM 42, such as by employing the DMA function of the system controlling CPU.

The communication interfacing unit 30 includes an Ethernet controller (MAC) 35 for network interfacing, a physical layer chip 36, a pulse transformer 37 for impedance matching and an RJ-45 connector 38.

The controller 40 includes the system controlling CPU 41, the system RAM 42 for buffering and for a work area, and a system ROM 43 for programming, interconnected over a bus, and communicates with the CPU 15 responsible for system control and camera control by the CPU 41 responsible for system control.

This camera server 1 has loaded thereon a protocol stack, such as TCP/IP or HTTP, as the software, and is able to view a picture from a remote place, with a viewer, such as Internet Explorer (IE), or to control the camera. With the camera control menu, the picture size can be selected, such that, for example, a 640x480 picture (frame picture) or a 640x240 picture (field picture) can be selected by a user.

With this client server system 7, the camera server 1 distributes an imaged output as JPEG compressed data in real-time to the plural PC clients A to D over the network 2.

It is noted that the camera server 1 of the client server system 7 accepts requests from the clients A to D through the communication interfacing unit 30 by the system controller 40 to form in the system RAM 42 a picture registration destination table TB used for registering the client who has made a picture data transmission request to distribute picture data relevant to the request from the respective clients A to D through the communication interfacing unit 30 in accordance with this picture registration destination table TB.

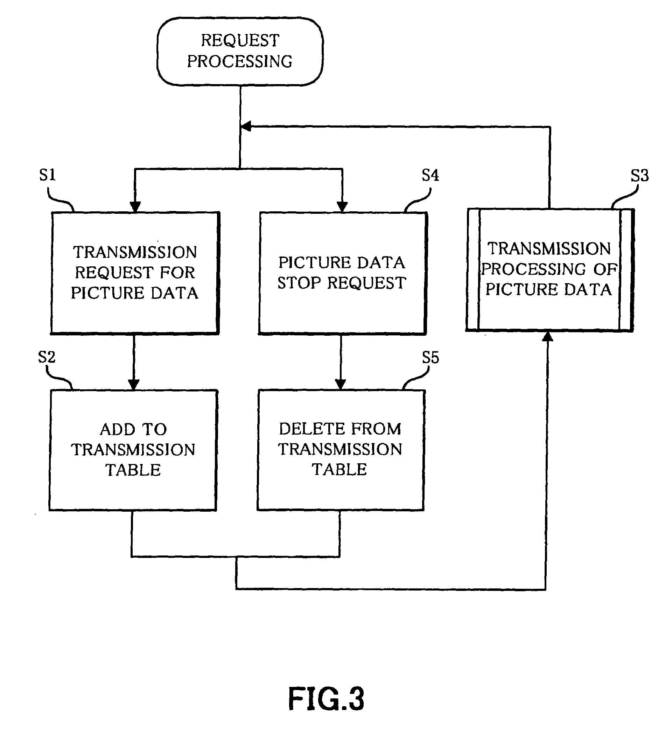

Fig.3 shows the sequence of the request processing in this client server system 7.

In this figure, the client desirous to have a picture displayed initially transmits a picture data transmitting request only once to the camera server 1 (step S1). On reception of the transmission request via the communication interfacing unit 30, the camera server 1 adds the client in the picture registration destination table TB formed on the system RAM 42 of the system controller 40 (step S2) and commences to transmit picture data via the communication interfacing unit 30 (step S3). The client desirous to terminate picture display transmits a picture data stop request to the camera server 1 (step S4). On reception of this transmission stop request, the camera server 1 deletes the client from the picture registration destination table TB (step S5) to stop transmission of the picture data (step S6).

It should be noted that, on accepting the picture data transmission request from the client, the camera server 1 automatically continues to transmit picture data in succession until the time of receiving the next picture data stop request from the client.

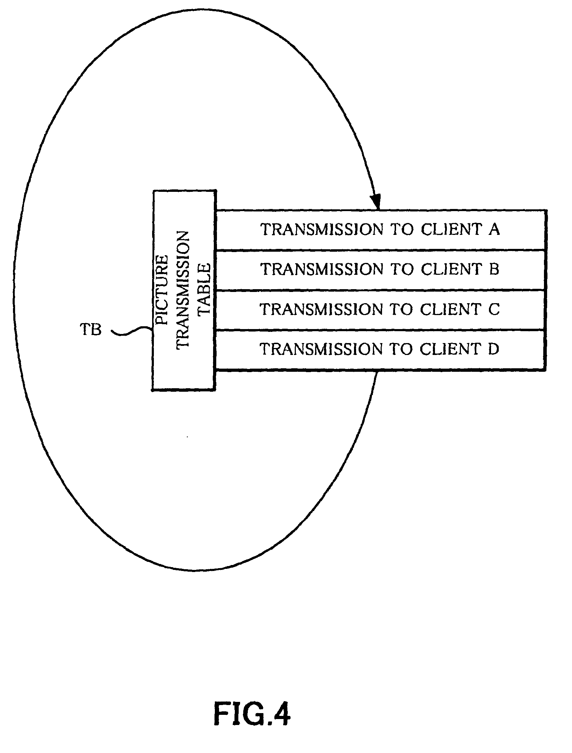

Fig.4 shows the picture data transmission processing sequence in the client server system 7.

That is, referring to Fig.4, the camera server 1 references the picture registration destination table TB, rewritten by the above transmission request, to transmit picture data sequentially to the respective PC clients A to D who have made the transmission requests.

The camera server 1 in this client server system 7 controls the frame rate in the following manner based on a frame rate information appended to the picture data transmission request from the respective clients A to D.

That is, on reception of the frame rate information, appended to the picture data transmission request from the client, the camera server 1 inserts and holds the frame rate information in the client information in the picture registration destination table TB. By holding the frame rate information in association with the respective clients A to D, it becomes possible to render services conforming to the requests from the respective clients.

The camera server 1 sequentially stores the real-time information (NTSC: 30 frames/sec; PAL, 25 frames/sec) in a memory. At the time of this storage, the time of picture compression is inserted in the picture registration destination table TB. The camera server 1 transmits picture data to the client. At this time, the time of compression of the picture transmitted is memorized.

The camera server 1 controls the frame rate in the following manner in accordance with the sequence shown in Table 5.

That is, in controlling the frame rate, 0 is entered in the previous transmission time by way of initialization (step S11).

When the picture data is transmitted to the same client next time, the time elapsed TA is calculated from the time of transmission of the previous picture and the time of the current picture (step S12).

The picture interval, that is the frame-to-frame time TB, is calculated, based on the frame rate information appended to the transmission request from the client (step S13).

· The time elapsed TA and the frame-to-frame time TB are then compared to each other (step S 14).

Except in case TA≥TB, processing reverts to the step S12 to repeat the processing of steps S12 to S14. In case TA≥TB, picture data is transmitted (step S15).

The time of the picture data transmitted at the time of previous transmission is set (step S 16). Then, processing reverts to the step S12 to repeat the processing of steps S 12 to S16.

By carrying out the above operations in succession, the camera server 1 transfers the picture data at the frame rate as requested by the client.

In the above-described system in which the frame-to-frame time is controlled to realize the targeted frame rate, the picture interval becomes substantially constant, so that the picture can be regenerated with a natural 'feel', when a moving picture is displayed, even though the frame rate is low.

Moreover, when the transfer frame rate is lower than the frame rate as requested by the client, due to network delay or overload occurring in the camera server 1, the lowering of the frame rate can be instantaneously detected by comparison only with the time of previous picture transmission, so that the picture data can be transmitted without unnecessarily lowering the frame rate. When the frame rate requested by the client cannot be realized, it is possible to realize the so-called best-effort type control in which transmission is made at the fastest frame rate under the then prevailing condition.

It is also possible for the camera server 1 to control the picture for the client in accordance with the procedure shown in Table 6. The camera server has an intrinsic timepiece for the camera.

First, the time of previous picture transmission of the timepiece for the camera is set to 0 and the number of sheets transmitted is also set to 0, by way of initialization (step S21).

When picture data is transmitted to the same client next time, the time elapsed TC is calculated from the time of the timepiece for the camera for the previously transmitted picture and the current time of the timepiece for the camera (step S12).

The interval setting time TB, as set by the client, is compared to the elapsed time TC (step S23).

Except in case time TC ≥time TB, processing reverts to the step S22 to repeat the processing of the step S22 to the step S23. If time TC ≥time TB, picture data is transmitted (step S24).

The time of transmission of the previous picture data is set and the number of transmitted sheets is incremented by one. This sequence of operations is carried out in succession.

The number of transmitted sheets E is compared to the setting number of sheets F, as requested by the client. In case the number of transmitted sheets E > the setting number of sheets F, processing reverts to the step S22 to repeat the processing of the steps S22 to S25 (step S26).

The camera server 1 performs the above operations in succession to transmit picture data based on the picture transmission interval and the number of sheets transmitted as requested by the client.

By controlling the transmission interval and the number of transmitted sheets as described above, picture transmission may be carried out in a desired manner. That is, the pictures can be transmitted accurately at a preset desired picture transmitting interval, without dependency upon the frame rate, such that the moving pictures may be displayed with the accuracy as requested by the client. In addition, the number of pictures as requested by the client may be transmitted accurately to the client. Although the above-mentioned time is referred to the time of the timepiece for the camera inherent to the camera server, the Japanese standard time, exploited in general, may be used. Although the above-mentioned method performs control based on the number of sheets, it becomes possible to transmit pictures only at the correct picture transmitting time in case of managing the picture transmitting instead of simply managing the number of the transmitted sheets. The number of transmitted sheets may also be controlled by supervising the picture transmission interval and the picture transmitting time.

The present invention is not limited to the embodiments described with reference to the drawings and, as may be apparent to those skilled in the art, various changes, substitutions or equivalents may be envisaged without departing from the scope and the purport of the invention as defined in the appended claims.

### Industrial Applicability

According to the present invention, picture transmission may be achieved on the client basis, in keeping with outstanding circumstances prevailing on the network or on the clients' terminals, such as PCs, or responsive to the client's request.

According to the present invention, the frequency range of the network employed tends to be widened because of the large information volume of picture data. If the transfer frame rate may be controlled on the part of each user, data transmission may be performed in a frequency band suited to the network to which belongs each client.

Moreover, according to the present invention, the CPU load of each client apparatus can be controlled by controlling the frame rate. Since the CPU load can be diminished by setting the frame rate to a low value, it is possible to carry out other processing operations as the picture is displayed.

In addition, according to the present invention, moving pictures with spontaneous 'feel' may be displayed because pictures are transmitted from the camera server each time an approximately equal time interval has elapsed, even though the frame rate is set to a lower value.

Furthermore, according to the present invention, picture transmission may be achieved by controlling the picture transmission interval and the number of transmitted pictures, so that picture transmission may be realized accurately at a preset constant interval and at a desired picture transmission interval. It is possible to display moving pictures with the resolution requested by the user, as well as to transmit the number of pictures as requested by the client.

## Claims

1. A camera server for distributing picture data to a client connected to a network, comprising
imaging means, compression processing means for converting the picture data, obtained by said imaging means, into compressed picture data, network interfacing means for communication with each client over said network, storage means for registering a picture transmission information, appended to a transmission request for picture data from a client, received over said network interfacing means, along with a client information indicating the client who has made the transmission request for said picture data, and control means for managing control for distributing compressed picture data, obtained by said compression processing means, to the client, over said network interfacing means, at a transmission interval of the client information registered in said storage means and the picture transmission information.

2. The camera server according to claim 1 wherein the transmission timing of said picture transmission information is a frame rate information.

3. The camera server according to claim 1 wherein the transmission timing of said picture transmission information is the picture transmission interval as set by the client.

4. The camera server according to claim 1 wherein the picture is transmitted at said transmission interval during the picture transmission time as set by the client.

5. A picture transmitting method for distributing picture data to a client connected to a network, comprising
performing the processing of compressing picture data, obtained by imaging means, into compressed picture data, registering a picture transmission information appended to a transmission request of picture data from a client and a client information indicating the client who has made the transmission request for said picture data, and distributing the compressed picture data from the compression processing to said client at a transmission interval of the registered client information and the registered picture transmission information.

6. A camera server for distributing picture data to a client connected to a network, comprising
imaging means, compression processing means for converting the picture data, obtained by said imaging means, into compressed picture data, network interfacing means for communication with the client over said network, storage means for registering a frame rate information, appended to a transmission request for picture data from each client, received over said network interfacing means, along with the client information indicating the client who has made the transmission request for said picture data, and control means for managing control for registering said client information and the frame rate information in said storage means and for distributing compressed picture data obtained by said compression processing means over said network interfacing means to each client at a requested frame rate based on the client information and the frame rate information registered in said storage means.

7. The camera server according to claim 6 wherein said control means manages control for calculating the time elapsed from the time of the latest picture and the time of transmission of a directly previous picture, for each client registered in said storage means, comparing the time of the frame rate calculated based on each frame rate information registered in said storage means to the elapsed time and for distributing the compressed picture data of the latest picture to a client for whom the elapsed time has surpassed the frame rate time.

8. A picture transmitting method for converting picture data obtained by imaging means into compressed picture data and distributing the compressed picture data from a camera server to a client connected to a network, comprising
registering a frame rate information appended to a transmission request for picture data from each client received by the camera server over a network interface, along with a client information indicating a client who has made the transmission request for said picture data, and distributing said compressed picture data to each client over said network interface, at a requested frame rate, based on the registered client information and frame rate information.

9. The picture transmitting method according to claim 8 further comprising
calculating the time elapsed from the time of the latest picture and the time of transmission of a directly previous picture, for each client for whom said client information has been registered, comparing the time of the frame rate calculated based on each registered frame rate information to said elapsed time and distributing the compressed picture data of the latest picture to a client for whom the elapsed time has surpassed the frame rate time.

## Amended claims

### Amended claims under Art. 19.1 PCT

**1.** (Amended) A camera server for distributing picture data to a client connected to a network, comprising
imaging means, compression processing means for converting the picture data, obtained by said imaging means, into compressed picture data, network interfacing means for communication with each client over said network, storage means for registering a picture transmission information corresponding to each client, appended to a transmission request for picture data from a client, received over said network interfacing means, along with a client information indicating the client who has made the transmission request for said picture data, and control means for managing control for distributing compressed picture data, obtained by said compression processing means, to the client, over said network interfacing means, at a transmission interval of the client information registered in said storage means and the picture transmission information.

**2.** (Deleted)

**3.** (Amended) The camera server according to claim 1 wherein the transmission timing of said picture transmission information is a frame rate information and the picture transmission interval as set by each client.

**4.** The camera server according to claim 1 wherein the picture is transmitted at said transmission interval during the picture transmission time as set by the client.

**5.** (Amended) A picture transmitting method for distributing picture data to a client connected to a network, comprising
performing the processing of compressing picture data, obtained by imaging means, into compressed picture data, registering a picture transmission information corresponding to each client, appended to a transmission request of picture data from a client and a client information indicating the client who has made the transmission request for said picture data, and distributing the compressed picture data from the compression processing to said client at a transmission interval of the registered client information and the registered picture transmission information.

**6.** (Amended) A camera server for distributing picture data to a client connected to a network, comprising
imaging means, compression processing means for converting the picture data, obtained by said imaging means, into compressed picture data, network interfacing means for communication with the client over said network, storage means for registering a frame rate information corresponding to each client, appended to a transmission request for picture data from each client, received over said network interfacing means, along with the client information indicating the client who has made the transmission request for said picture data, and control means for managing control for registering said client information and the frame rate information in said storage means and for distributing compressed picture data obtained by said compression processing means over said network interfacing means to each client at a requested frame rate based on the client information and the frame rate information registered in said storage means.

**7.** (Amended) The camera server according to claim 6 wherein said control means manages control for calculating the time elapsed from the time of the latest picture and the time of transmission of a directly previous picture, for each client registered in said storage means, comparing the time of the frame rate calculated based on each frame rate information registered in said storage means to the elapsed time and for distributing the compressed picture data of the latest picture to a client for whom the elapsed time has surpassed the frame rate time.

**8.** (Amended) A picture transmitting method for converting picture data obtained by imaging means into compressed picture data and distributing the compressed picture data from a camera server to a client connected to a network, comprising
registering a frame rate information corresponding to each client, appended to a transmission request for picture data from each client received by the camera server over a network interface, along with a client information indicating a client who has made the transmission request for said picture data, and distributing said compressed picture data to each client over said network interface, at a requested frame rate, based on the registered client information and frame rate information.

**9.** (Amended) The picture transmitting method according to claim 8 further comprising
calculating the time elapsed from the time of the latest picture and the time of transmission of a directly previous picture, for each client for whom said client information has been registered, comparing the time of the frame rate calculated based on each registered frame rate information to said elapsed time and distributing the compressed picture data of the latest picture to a client for whom the elapsed time has surpassed the frame rate time.
